**Europäisches Patentamt**

**European Patent Office**

**Office européen des brevets**

(11) Numéro de publication: **0 117 800**
**B1**

(12) # FASCICULE DE BREVET EUROPEEN

(45) Date de publication du fascicule du brevet:
**17.09.86**

(51) Int. Cl.⁴: **C 05 F 5/00,** F 23 G 7/02,
C 04 B 5/02

(21) Numéro de dépôt: **84400280.8**

(22) Date de dépôt: **10.02.84**

(54) **Procédé de fabrication d'un engrais granulé par traitement de vinasses et installation pour la mise en oeuvre de ce procédé.**

(30) Priorité: **28.02.83 FR 8303214**

(43) Date de publication de la demande:
**05.09.84 Bulletin 84/36**

(45) Mention de la délivrance du brevet:
**17.09.86 Bulletin 86/38**

(84) Etats contractants désignés:
**AT BE DE GB SE**

(56) Documents cités:
**EP - B - 0 048 061**
**FR - A - 1 077 850**
**FR - A - 2 353 034**
**GB - A - 349 178**
**US - A - 1 631 252**

(73) Titulaire: **FIVES-CAIL BABCOCK, Société anonyme, 7 rue Montalivet, F-75383 Paris Cedex 08 (FR)**

(72) Inventeur: **Michiel, Julien, 7, Place des Bégonias, F-95500 Gonesse-les-Marronniers (FR)**

(74) Mandataire: **Fontanié, Etienne, FIVES-CAIL BABCOCK 7, rue Montalivet, F-75383 Paris Cedex 08 (FR)**

## Description

La présente invention concerne la fabrication d'un engrais granulé, plus particulièrement par traitement de vinasses.

On sait que les vinasses proviennent des distilleries vinicoles, des sucreries et des distilleries de betteraves et de cannes. Convenablement concentrées (siccité de 50 à 60% par exemple), il est possible de les faire brûler dans une chaudière dont elles alimentent les brûleurs, d'une manière analogue à la liqueur noire dans les papeteries, les matières minérales contenues dans les vinasses étant récupérées à la base du foyer de la chaudière sous forme de cendres à l'état fondu, comme décrit dans le document EP-A-48.061. Ces cendres contiennent des sels de potassium qui peuvent être utilisés comme engrais et pour cette utilisation il est intéressant de les obtenir sous forme de granulés.

Le but de la présente invention est de permettre la récupération des matières minérales des vinasses sous forme de granulés.

L'invention a plus précisément pour objet un procédé de fabrication d'un engrais granulé, par traitement des vinasses, consistant à incinérer les vinasses convenablement concentrées dans une chaudière dont elles alimentent les brûleurs et à récupérer, à la base du foyer de la chaudière, les matières minérales sous forme de cendres à l'état fondu et caractérisé en ce qu'on injecte un fluide dans lesdites cendres pour en briser la veine liquide et la disperser en gouttelettes, et l'on projette simultanément lesdites gouttelettes dans un bain d'une solution saturée de cendres.

Le jet injecté dans la veine liquide est préférablement un jet de vapeur d'eau.

D'une manière particulièrement avantageuse, l'on acidifie la liqueur de vinasses par l'acide sulfurique avant admission aux brûleurs.

L'invention a également pour objet une installation pour la fabrication d'un engrais granulé par traitement des vinasses comprenant une chaudière à parois tubulaires comportant un foyer, au moins un brûleur de liqueur de vinasses disposé dans le foyer, une admission d'air préchauffé dans le foyer et une goulotte disposée à la base du foyer pour évacuer les matières minérales sous forme de cendres à l'état fondu, et caractérisée en ce qu'elle comporte en outre un granulateur à la partie supérieure duquel débouche ladite goulotte, et une buse d'injection de vapeur débouchant à ladite partie supérieure du granulateur pour briser la veine liquide de cendres et la disperser en gouttelettes.

Le granulateur comprend avantageusement une cuve de trempe et de granulation, partiellement remplie d'une solution saturée de cendres, un moyen pour agiter ladite solution et les gouttelettes qu'elle reçoit, et un transportueur disposé le long de la paroi de fond inclinée de la cuve pour en extraire les granulés qui s'y sont formés.

Le granulateur comprend en outre, une tubulure verticale ascendante d'élimination des buées, et une tubulure verticale descendante d'évacuation des granulés.

Il est avantageusement prévu, en amount du ou des brûleurs, un réacteur pour acidifier la liqueur de vinasses par l'acide sulfurique.

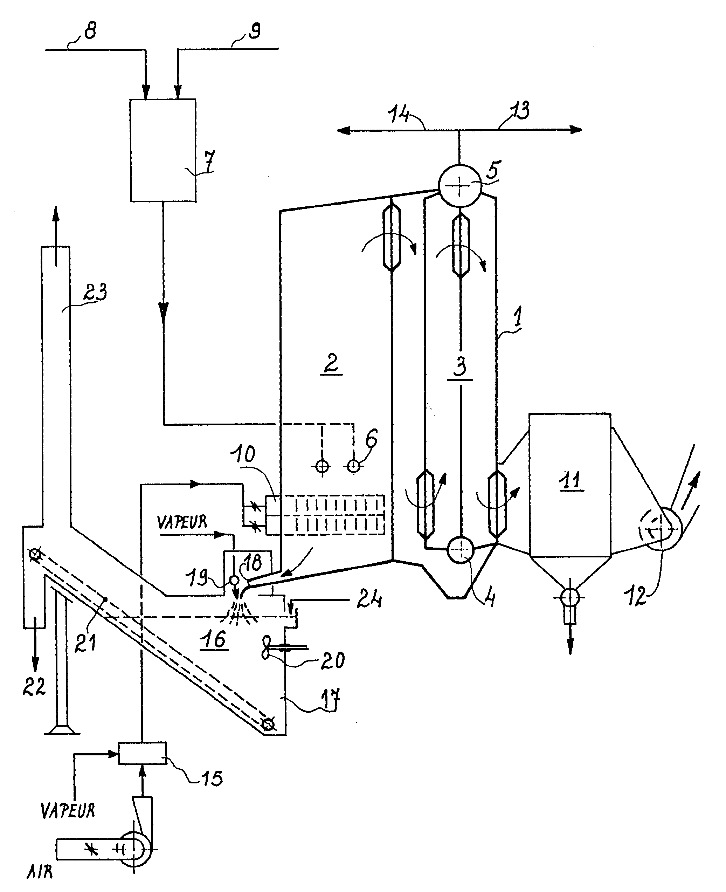

L'invention sera mieux comprise en se référant à la description qui suit, faite en regard du dessin annexé, concernant une forme particulière de réalisation d'une installation pour la mise en oeuvre du procédé, donnée à titre d'exemple non limitatif.

La figure unique est une vue schématique représentant l'ensemble de l'installation.

Sur la figure, le repère 1 désigne globalement une chaudière à parois tubulaires. Cettes chaudière comprend un foyer 2 et un faisceau tubulaire vertical 3 monté entre deux ballons, respectivement inférieur 4 et supérieur 5. Dans les parois du foyer 2 sont montés des brûleurs, tels que 6, inclinés vers le bas et à pulvérisation assistée. Ces brûleurs sont adaptés pour brûler les vinasses en provenance d'un réacteur 7 alimenté en vinasses par la tuyauterie 8 et en acide sulfurique par la tuyauterie 9. Des admissions 10 d'air préchauffé, en forme de buses par exemple, débouchent dans le foyer 2 juste au-dessous des brûleurs 6. Ces admissions ceinturent le foyer 2.

Les fumées sortent du foyer 2 à sa partie supérieure, traversent le faisceau tubulaire 3 suivant le sens indiqué par les flèches, puis un électro-filtre 11, avant d'être évacuées par un ventilateur de tirage 12 vers une cheminée non représentée. La vapeur produite sort du ballon supérieur 5 par la tuyauterie 13 tandis qu'une partie de la vapeur est prélevée par la tubulaire 14 pour les besoins de l'installation elle-même. Un premier besoin consiste à alimenter le réchauffeur d'air 15 qui alimente à son tour les admissions 10 précitées. Un deuxième besoin consiste à alimenter un granulateur dont il va être parlé plus explicitement ci-après.

Ce granulateur, repéré 16 dans son ensemble, est constitué par une cuve de trempe 17 partiellement remplie d'une solution saturée de cendres. La cuve 17 est alimentée en cendres liquides par la goulotte 18 sortant de la partie inférieure du foyer 2. La vapeur prélevée de la tuyauterie 14 alimente une buse d'injection 19 à la partie supérieure du granulateur 16. Le jet de vapeur brise la veine liquide sortant de la goulotte 18, et la disperse en gouttelettes qui sont projectées dans la cuve 17. Un agitateur 20, réalisé sous la forme d'une hélice par exemple, brasse le contenu de la cuve 17 où se produit la granulation. Ladite cuve présente en section transversale la forme d'un V dont le fond étroit supporte une chaîne transporteuse 21 qui remonte les granulés vers la partie supérieure à travers la surface libre du liquide contenue dans la cuve 17. Ces granulés sont recueillis par une tubulaire verticale descendante 22, tandis qu'un tubulaire verticale ascendante 23 permet l'évacuation des buées formées sous l'effet de la légère dépression régnante au-dessous du niveau précité. Un appoint d'eau continu en 24 permet de maintenir le niveau. Cet appoint compense la parte d'eau par évaporation et la perte d'eau par mouillage des granulés, particulièrement égouttés en fin de transport.

L'acidification des vinasses par l'acide sulfurique n'est pas impérative, mais elle présente l'avantage de valoriser les cendres qui représentent environ 20% de la matière sèche. Toutefois, l'attaque des sels de potassium et de sodium ne doit être que par-

3 **0 117 800** 4

tielle, afin d'éviter un excès d'acide libre pouvant corroder la chaudière. Pendant la phase de combustion, les sels organiques et les carbonates sont ainsi transformés en sulfates. Ces sels sortent à la base du foyer 2 à l'état fondu comme dans le cas d'une chaudière à liqueur noire. La veine de liquide sortant par la goulotte 18 est à une température de l'ordre de 600°C. Cette température est fonction de la proportion des sels de potassium et de sodium dans ladite veine liquide.

Il va de soi que les cendres fondues sont constituées par des sulfates ou par des carbonates suivant que l'on a prévu ou non un réacteur à acide sulfurique en amont des brûleurs 6 de la chaudière.

La liqueur pulvérisée dans les brûleurs 6 brûle avec l'air réchauffé à 150°C passant dans les buses d'admission 10. A l'intérieur du granulateur 16, le mouvement relatif des gouttes et de la solution saturée favorise le refroidissement desdites gouttes. La température de la solution se stabilise aux environs de 100°C.

Bien que l'invention ait été décrite en référence à une forme particulière de réalisation, il va de soi qu'elle n'y est en rien limitée et que des modifications peuvent lui être apportée sans sortir de son domaine.

On pourra, par exemple, faire appel à un autre fluide que la vapeur d'eau pour briser la veine de cendres liquides et la disperser en gouttelettes.

D'une façon générale, on pourra remplacer tout moyen de l'installation décrite par un moyen techniquement équivalent.

L'invention couvre donc, outre l'exemple représenté, ses différentes variantes d'exécution possibles dans les limites définies par les revendications.

## Revendications

1. Procédé de fabrication d'un engrais granulé, par traitement de vinasses, consistant à incinérer les vinasses convenablement concentrées dans une chaudière (1) dont elles alimentent les brûleurs (6) et à récupérer, à la base du foyer (2) de ladite chaudière, les matières minérales sous forme de cendres à l'état fondu, et caractérisé en ce qu'on injecte un fluide dans lesdites cendres pour en briser la veine liquide et la disperser en gouttelettes, et l'on projette simultanément lesdites gouttelettes dans un bain d'une solution saturée de cendres.

2. Procédé suivant la revendication 1, caractérisé en ce que le jet injecté dans la veine liquide est un jet de vapeur d'eau.

3. Procédé suivant l'une des revendications 1 ou 2, caractérisé en ce que l'on acidifie la liqueur de vinasses par l'acide sulfurique avant admission aux brûleurs (6).

4. Installation pour la fabrication d'un engrais granulé par traitement de vinasses comprenant une chaudière (1) à parois tubulaires comportant un foyer (2), au moins un brûleur (6) de liqueur de vinasses disposé dans le foyer (2), une admission (10) d'air préchauffé dans le foyer et une goulotte (18) disposé à la base du foyer (2) pour évacuer les matières minérales sous forme de cendres à l'état fondu, et caractérisée en ce qu'elle comporte en outre un granulateur (16) à la partie supérieure duquel débouche ladite goulotte (18), et une buse (19) d'injection de vapeur débouchant à ladite partie supérieure du granulateur (16) pour briser la veine liquide de cendres et la disperser en gouttelettes.

5. Installation suivant la revendication 4, caractérisée en ce que le granulateur (16) comprend une cuve (17) de trempe et de granulation, partiellement remplie d'une solution saturée de cendres, un moyen (20) pour agiter ladite solution et les gouttelettes qu'elle reçoit, et un transporteur (21) disposé le long de la paroi de fond inclinée de la cuve (17) pour en extraire les ganulés qui s'y sont formés.

6. Installation suivant la revendication 5, caractérisée en ce que le granulateur (16) comprend en outre, une tubulure verticale ascendante (23) d'élimination des buées, et une tubulure verticale descendante (22) d'évacuation des granulés.

7. Installation suivant la revendication 4, caractérisée en ce qu'il est prévu, en amont du ou des brûleurs (6), un réacteur (7) pour acidifier la liqueur de vinasses par l'acide sulfurique.

## Patentansprüche

1. Verfahren zum Verfertigen eines granulierten Düngemittels durch Behandeln von Vinasse, bestehend darin, die zweckentsprechend konzentrierte Vinasse in einem Kessel (1), dessen Brenner (6) damit versorgt werden, zu veraschen und die Mineralstoffe aschenförmig im geschmolzenen Zustand im Unterteil des Kesselfeuerraums (2) rückzugewinnen, und dadurch gekennzeichnet, dass man ein Mittel in die Asche injiziert, um deren flüssigen Strom zu brechen und diesen tröpfchenförmig zu verteilen, und man gleichzeitig die Tröpfchen in das Bad einer mit Aschen gesättigten Lösung spritzt.

2. Verfahren nach Anspruch 1, dadurch gekennzeichnet, dass der in den flüssigen Strom injizierte Strahl ein Wasserdampfstrahl ist.

3. Verfahren nach Anspruch 1 oder 2, dadurch gekennzeichnet, dass die Vinasselösung vor Eintritt in die Brenner (6) mit Schwefelsäure angesäuert wird.

4. Anlage zum Verfertigen eines granulierten Düngemittels durch Behandeln von Vinasse, bestehend aus einem Kessel (1) mit Rohrwänden, der einen Feuerraum (2), mindestens einen im Feuerraum (2) angeordneten Vinasselösungsbrenner (6), einen Eintritt (10) für die im Feuerraum vorgewärmte Luft und eine im Unterteil des Feuerraums (2) angeordnete Schurre (18) zum Abzug der Mineralstoffe in Form von Asche im geschmolzenen Zustand umfasst, dadurch gekennzeichnet, dass sie ferner aus einem Granulator (16), im Oberteil dessen die Schurre (18) einmündet, und einer Dampfspritzdüse (19) besteht, die im Oberteil des Granulators (16) einmündet, um den flüssigen Aschenstrom zu brechen und die Asche tröpfchenförmig zu verteilen.

5. Anlage nach Anspruch 4, dadurch gekennzeichnet, dass der Granulator (16) aus einem Tauch- und Granuliergefäss (17), das mit einer mit Aschen gesättigten Lösung teilweise gefüllt ist, einem Mittel (20) zum Rühren der Lösung sowie der in die Lösung injizierten Tröpfchen und einem längs der geneigten Bodenwand des Gefässes (17) angeordneten Förderer (21) besteht, der das gebildete Granulat abführt.

6. Anlage nach Anspruch 5, dadurch gekennzeichnet, dass der Granulator (16) ferner ein vertikales aufsteigendes Rohr (23) zur Entfernung der Dünste und ein vertikales absteigendes Rohr (22) zur Abführung des Granulats umfasst.

7. Anlage nach Anspruch 4, dadurch gekennzeichnet, dass ein Reaktor (7) zum Ansäuern der Vinasselösung mit Schwefelsäure von dem oder den Brenner(n) vorgesehen ist.

## Claims

1. Method for the preparation of granulated fertilizer by treatment of vinasse, consisting in incinerating the properly concentrated vinasse in a boiler (1) the burners (6) of which are fed with the said vinasse, and in recovering the mineral matter in the form of molten ashes from the bottom of the furnace (2) of the said boiler, and characterised by the fact that a fluid is injected into the said ashes to break up the liquid stream and disperse it in the form of droplets which are simultaneously projected into a bath consisting of a solution saturated with ashes.

2. A process according to claim 1, characterised by the fact that the jet injected into the liquid stream is a jet of water steam.

3. Process according to claim 1 or 2, characterized by the fact that the vinasse liquor is acidified by means of sulphuric acid, prior to admission to the burners (6).

4. Plant for the production of granulated fertilizer by treatment of vinasse, including a tube wall boiler comprising a furnace (2), at least one vinasse liquor burner (6) in the furnace (2), a preheated air inlet (10) to the furnace and a chute (18) located at the bottom of the furnace (2) to discharge the mineral matter in the form of molten ashes, and characterized by the fact that it further comprises a granulator (16) to the upper part of which leads the said chute (18), and a steam injection nozzle (19) which leads to the said upper part of the granulator (16) to break up the liquid ash stream and disperse it in the form of droplets.

5. Plant, according to claim 4, characterised by the fact that the granulator (16) includes a quenching and granulating tank (17), partially filled with a solution saturated with ash, a device (20) to stir the said solution and the droplets it receives, and a conveyor (21) arranged along the inclined bottom wall of the tank (17) to withdraw from it the granules which have formed in the tank.

6. Plant, according to claim 5, characterised by the fact that the granulator (16) further comprises a vertical upward vapour discharge pipe and a vertical downward granules discharge pipe.

7. Plant according to claim 4, characterized by the fact that provision has been made, upstream of the burner or burners (6), for a reactor (7) to acidify the vinasse liquor by means of sulphuric acid.